# EUROPEAN PATENT SPECIFICATION

(11) **EP 1 845 333 B1**
(45) Date of publication and mention of the grant of the patent: **19.11.2008**
(21) Application number: 07007435.6
(22) Date of filing: 11.04.2007
(51) Int. Cl.: G01B 5/00, G01B 5/20, G01B 5/28, G01B 7/28, G01B 7/34, G01B 21/20, G01B 21/30, B23Q 17/20

(54) **Profile measuring machine**
Vorrichtung zum Messen von Profilen
Machine de mesure de profils

(30) Priority: 13.04.2006 JP 2006110855
(43) Date of publication of application: 17.10.2007
(73) Proprietor: Mitutoyo Corporation, Takatsu ku Kawasaki-shi Kanagawa-ken 213-8533 (JP)
(72) Inventor: Inohara, Kouzou, Kure-shi, Hiroshima 737-0112 (JP); Hama, Nobuyuki, Kure-shi, Hiroshima 737-0112 (JP); Kojima, Toru, Kawasaki-shi, Kanagawa 213-8533 (JP)
(74) Representative: Grünecker, Kinkeldey, Stockmair & Schwanhäusser Anwaltssozietät

(56) References cited:
- EP-A- 1 258 700
- EP-A2- 0 597 299
- FR-A- 2 801 965
- US-B1- 7 191 540

## Description

The present invention relates to a profile measuring machine, more particularly, it relates to a profile measuring machine, which is suitable for a CNC type surface roughness measuring machine or a contour measuring machine, including: a rotation table for measuring a profile of a shaft-like workpiece while fixing and rotating a shaft of the shaft-like workpiece; and a tool for box-like workpieces which is fixed to the rotation table and used for measuring a profile of a box-like workpiece while keeping the box-like workpiece at a predetermined angle.

A surface characteristic measuring machine is known which is disclosed in Japanese Published Unexamined Patent Application No. 2002-340503.

EP-0597299 discloses a profile measuring machine for measuring box-like workpieces kept at a predetermined angle. Locking means are provided for fixing the holder after the holder has been rotated.

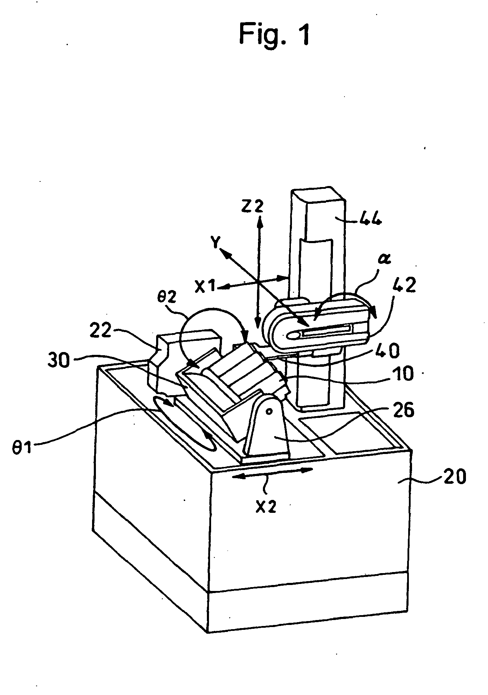

As a method for measuring a surface roughness of each inclined surface of the box-like workpiece such as an engine block with use of such a surface characteristic measuring machine, there exists, as shown in Fig. 1, a method for measuring vertical cross sections of the box-like workpiece 10 from a plurality of angles by fixing the box-like workpiece (a cylinder head in Fig. 1) 10 to a U-shaped tool 30 for box-like workpieces, fixing the tool 30 for box-like workpieces to a circle table 22 attached to a rotating shaft of the surface characteristic measuring machine and holding the tool 30 between the circle table 22 and a tail stock 26, and rotating the box-like workpiece 10 around an axis Y orthogonal to a measuring axis X₁ in θ₂ direction with rotation of the circle table 22.

Here, movement in an X₂ direction and rotation around an axis X in a θ₁ direction are performed by manual operation.

In the figures, the reference symbol 20 denotes a base, 40 denotes a measuring probe, 42 denotes a measuring head which is movable in an X₁ direction and rotatable in an α direction to hold the measuring probe 40, and 44 denotes a column which is movable in a Y direction to make the measuring head 42 go up and down in a Z₂ direction.

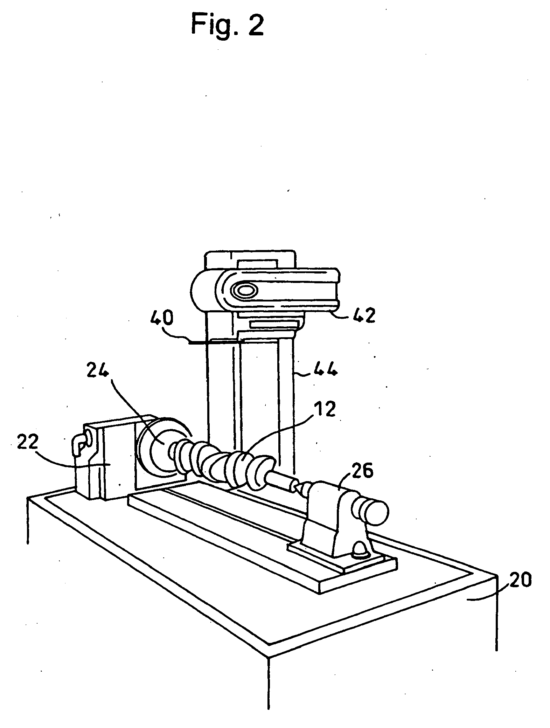

Additionally (see fig. 2), in a method for measuring a surface roughness in an axial direction of a shaft-like workpiece 12 by measuring lateral cross sections of the workpiece 12 while rotating it, the shaft-like workpiece 12 is fixed to three claw chucks 24 of the circle table 22, and clamped between the circle table 22 and the tail stock 26 to be rotated.

However, in a conventional profile measuring machine, measuring tools for box-like workpieces and shaft-like workpieces are separately used. Accordingly, the machine must be used as an exclusive machine for box-like workpieces, or for shaft-like workpieces. Alternatively, in order that the machine copes with the box-like workpiece and shaft-like workpiece, the tool for box-like workpieces must be exchanged for a tool for shaft-like workpieces because it particularly impedes measurement of the shaft-like workpiece. Accordingly, it takes time to measure a profile of the shaft-like workpiece, and work efficiency is lowered.

The present invention was made in order to solve the above problem. It is an object of the present invention to provide a profile measuring machine in which a measuring mode for box-like workpieces and a measuring mode for shaft-like workpieces can be alternatively switched at one touch without exchanging a tool for box-like workpieces and a tool for shaft-like workpieces for each other.

In order to solve the problem, in a profile measuring machine of the present invention, including: a rotation table for measuring a profile of a shaft-like workpiece while fixing and rotating a shaft of the shaft-like workpiece; and a tool for box-like workpieces which is interlocked to the rotation table and used for measuring a profile of a box-like workpiece while keeping the box-like workpiece at a predetermined angle, locking means is provided for rotating the tool for box-like workpieces at the predetermined angle with rotation of the rotation table in measuring the profile of the box-like workpiece, and for holding the tool for box-like workpieces at a standby position regardless of the rotation of the rotation table by canceling an interlock of the rotation table with the tool for box-like workpieces in measuring the profile of the shaft-like workpiece.

Additionally, a workpiece is measured as a box-like workpiece or a shaft-like workpiece in accordance with a state of the locking means, and thus no erroneous measurement can be caused.

According to the present invention, both the profiles of the box-like workpiece and shaft-like workpiece can be measured, and further the measuring modes for box-like workpieces and shaft-like workpieces can be alternatively switched at one touch. Thus, a preparation time for measurement can be greatly reduced. Additionally, since the profiles of the box-like workpiece and shaft-like workpiece can be measured by a single measuring machine, a space for measuring machines can be reduced.

The preferred embodiments will be described with reference to the drawings, wherein like elements have been denoted throughout the figures with like reference numerals, and wherein;
Fig. 1 is a perspective view of a conventional profile measuring machine in measuring a profile of a box-like workpiece.
Fig. 2 is a perspective view of the conventional profile measuring machine in measuring a profile of a shaft-like workpiece.
Fig. 3 is a front view of a profile measuring machine according to an embodiment of the present invention.
Fig. 4 is a right side view of the profile measuring machine according to the embodiment of the present invention.
Fig. 5 is a plan view of the profile measuring machine according to the embodiment of the present invention.
Fig. 6 is a cross sectional view of a rotation table side of the profile measuring machine according to the embodiment of the present invention.
Fig. 7 is a cross sectional view of a tail stock side of the profile measuring machine according to the embodiment of the present invention.
Fig. 8A is an enlarged cross sectional view of the rotation driving side thereof in which a reflection-type sensor is provided in a pin insertion hole, and Fig. 8B is an enlarged cross sectional view of the tail stock side thereof in which the reflection-type sensor is provided in a pin insertion hole.

An embodiment of the present invention will be described hereinafter with reference to the accompanying drawings.

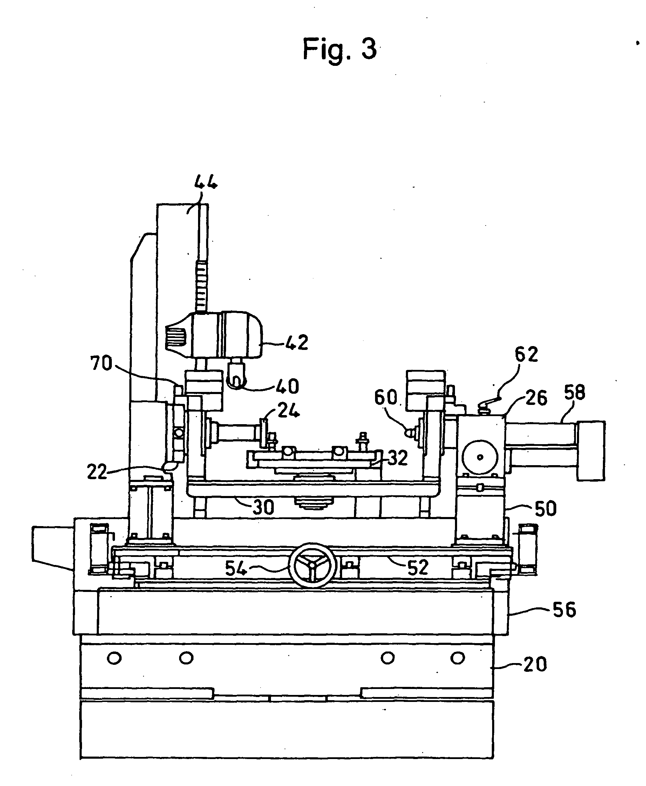

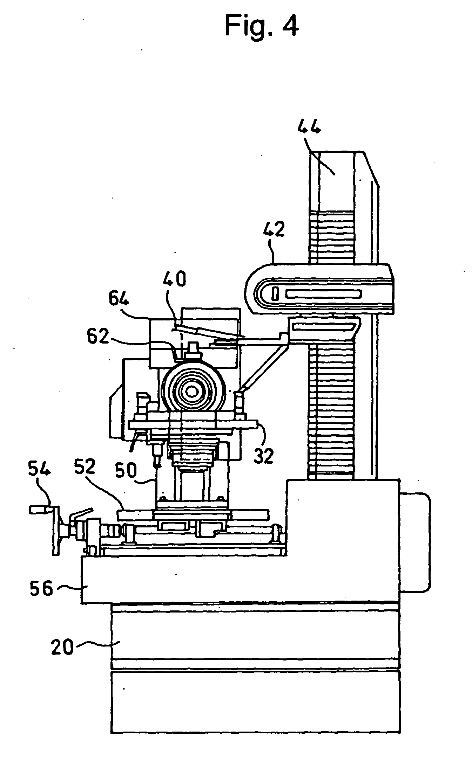

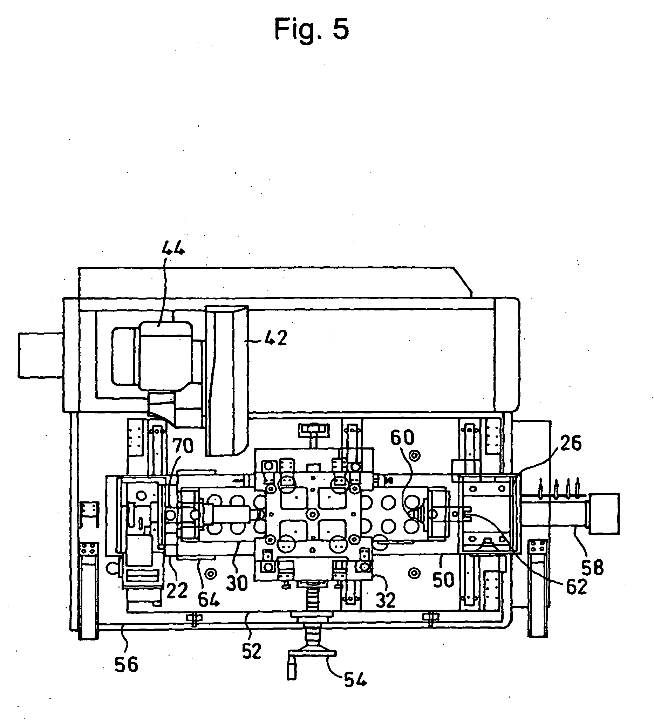

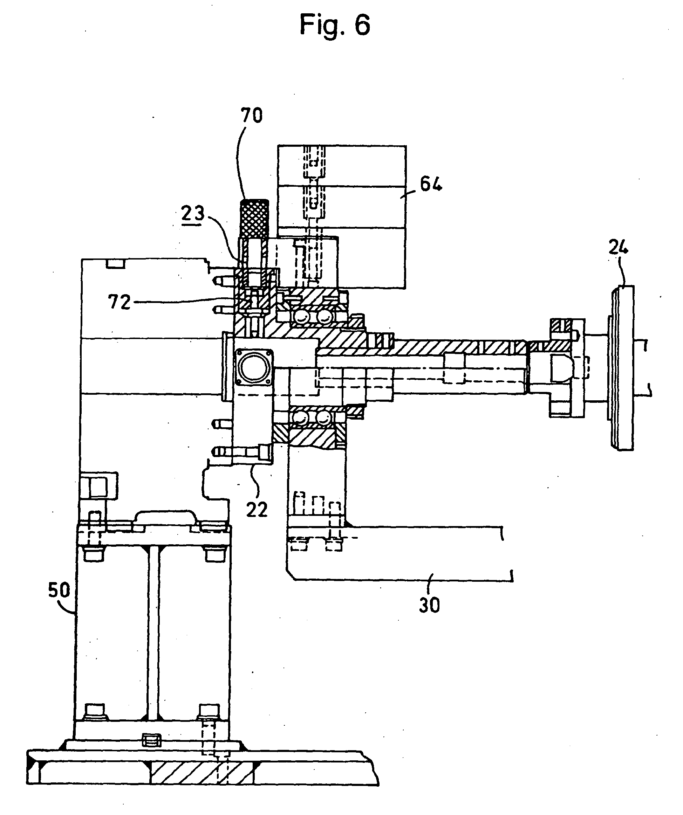

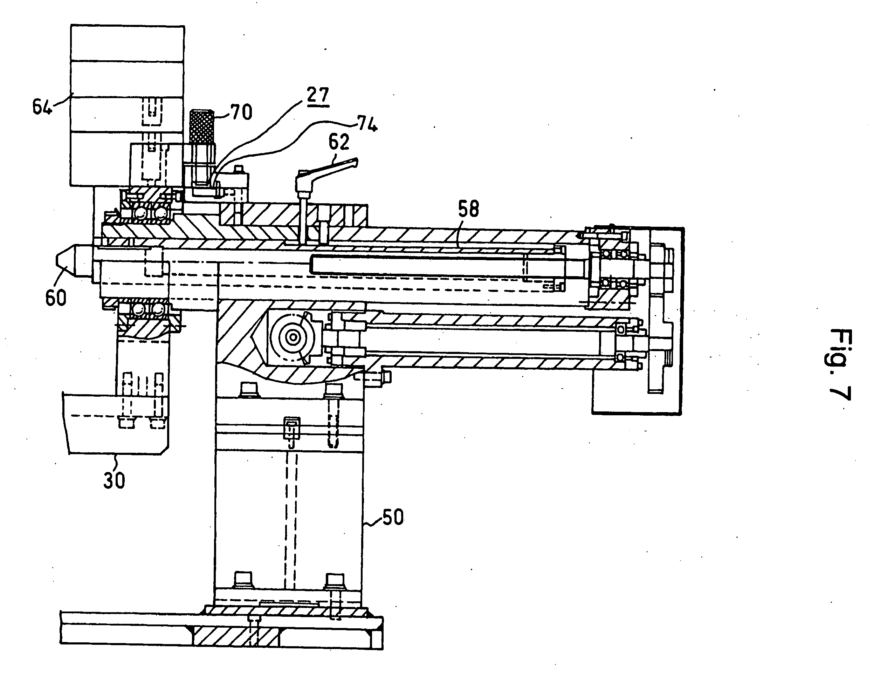

In a profile measuring machine of the present invention shown in Fig. 3 (front view), Fig. 4 (right side view) and Fig. 5 (plan view), as clearly shown in Fig. 6 (cross sectional view of a rotation table side) and Fig. 7 (cross sectional view of a tail stock side), a tool 30 for box-like workpieces is constantly clamped between a rotation table (a circle table 22 for example) and a tail stock 26 on opposite side thereof, a switching pin 70 for box-like/shaft-like is provided for rotating the tool 30 for box-like workpieces at a predetermined angle with rotation of the circle table 22 in measuring a profile of a box-like workpiece, and for holding the tool 30 for box-like workpieces at a lower standby position regardless of the rotation of the circle table 22 by canceling an interlock of the circle table 22 and tail stock 26 with the tool 30 for box-like workpieces in measuring a profile of a shaft-like workpiece. Here, a gravity center of the tool 30 for box-like workpieces is offset in relation to a rotational center of the circle table 22 in a state where no workpiece is mounted on the tool 30, the offset gravity center is positioned lower than a rotating shaft in a vertical direction, and thus the tool 30 stands by below.

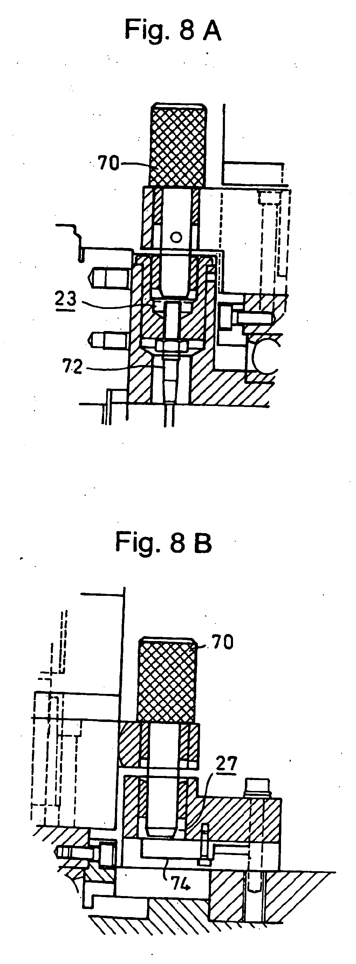

Further, reflection-type sensors (simply referred to as sensor, hereinafter) 72, 74, each which is constituted by, for example, a reflection-type limit switch, are arranged at bottoms of a pin insertion hole 23 on the rotation table side as shown in Fig. 8A and a pin insertion hole 27 on the tail stock 26 side as shown in Fig 8B respectively. Here, the sensor 72 is arranged upward at the bottom of the pin insertion hole 23, and the sensor 74 is laterally arranged at the bottom of the pin insertion hole 27.

In the figures, the reference symbol 32 denotes a position-adjustable palette for fixing the box-like workpiece onto the tool 30 for box-like workpieces, 50 denotes a laid table for holding the circle table 22 and the tail stock 26, 52 denotes a sliding plate for shifting the laid table 50 in a Y axis direction, 54 denotes a handle for shifting the sliding plate 52 in the Y axis direction, 56 denotes a base plate, 58 denotes a shaft for changing a position of a center 60 on the tail stock 26 side in accordance with a size of the workpiece, 62 denotes a lever for fixing the shaft 58, and 64 denotes a balance weight for bringing a gravity center of the whole of the workpiece and tool 30 for box-like workpieces close to the rotation center of the circle table 22 as much as possible because of a low capacity of an unbalance torque of the circle table 22.

Here, the tool 30 for box-like workpieces rotates with the circle table 22 in a state where the switching pin 70 is inserted in the pin insertion hole 23 on the rotation table side. Accordingly, when the box-like workpiece is fixed to the tool 30 for box-like workpieces, a vertical cross sectional area of the box-like workpiece at a predetermined angle can be measured.

On the other hand, when the switching pin 70 is taken out from the pin insertion hole 23 on the rotation table side and inserted in the pin insertion hole 27 on the tail stock 26 side, the tool 30 for box-like workpieces is fixed at the lower standby position, only the center part is rotated, and the rotation shaft is rotated.

Accordingly, the shaft-like workpiece is fixed to the chucks 24 so as to be clamped between the chucks 24 and the center 60 on the tail stock 26 side, and thus a lateral cross sectional area of the shaft-like workpiece can be measured while the shaft-like workpiece is rotated.

Further, presence of the switching pin 70 is checked by the sensors 72, 74, and thus an executable part program is selected, and an erroneous measurement is prevented. Here, outputs of the sensors 72, 74 are checked so that an erroneous operation can be prevented, for example, the circle table 22 can be prevented from rotating before the tool 30 for box-like workpieces is fixed at the standby position with the switching pin 70 pulled out. Moreover, the sensor is not limited to the reflection-type limit sensor, and a transmission type sensor may be employed. Additionally, the switching pin may directly press a mechanical push button switch provided upward at the bottom of the pin insertion hole.

In the embodiment, since one switching pin 70 allows the tool 30 for box-like workpieces to move with the circle table 22 and to be fixed to the tail stock 26, a simple constitution is obtained. Moreover, pins different from each other may be provided on the rotation driving side and on the tail stock 26 side respectively, locking means other than the pin may be employed.

## Claims

1. A profile measuring machine comprising:
a rotation table (22) for measuring a profile of a shaft-like workpiece (12) while fixing and rotating a shaft of the shaft-like workpiece (12); and
a tool (30) for box-like workpieces which is interlocked to the rotation table and used for measuring a profile of a box-like workpiece (10) while keeping the box-like workpiece (10) at a predetermined angle;
wherein locking means (70) is provided for rotating the tool (30) for box-like workpieces at the predetermined angle with rotation of the rotation table for measuring the profile of the box-like workpiece (10), and for holding the tool (30) for box-like workpieces at a standby position regardless of the rotation of the rotation table by canceling interlock of the rotation table with the tool (30) for box-like workpieces for measuring the profile of the shaft-like workpiece (12).

2. The profile measuring machine according to claim 1, wherein the standby position is under a measuring position.

3. The profile measuring machine according to claim 1 or 2, wherein the locking means is a switching pin (70) for box-like/shaft-like which is inserted into a pin insertion hole (23) on a rotation table side or a pin insertion hole (27) on a table stock (26) side opposite to the rotation table side.

4. The profile measuring machine according to any of claims 1 to 3, wherein operation is limited to either for a box-like workpiece (10) or for a shaft-like workpiece (12) in accordance with a state of the locking means.

5. The profile measuring machine according to any of claims 1 to 4, wherein reflection-type sensors (72, 74) detect a state of the switching pin (70) for box-like/shaft-like, the sensors being provided at bottoms of the pin insertion holes (23, 27).

6. The profile measuring machine according to claim 5, wherein the reflection-type sensor (72) on the rotation table side is provided upward at the bottom of the pin insertion hole (23), and the reflection-type sensor (74) on the tail stock (26) side is laterally provided at the bottom of another pin insertion hole (27).

## Patentansprüche

1. Profilmessmaschine, die umfasst:
einen Drehtisch (22) zum Messen eines Profils eines wellenartigen Werkstücks (12), während eine Welle des wellenartigen Werkstücks (12) fixiert und gedreht wird; und
ein Werkzeug (30) für kastenartige Werkstücke, das mit dem Drehtisch in Eingriff ist und dazu dient, ein Profil eines kastenartigen Werkstücks (10) zu messen, während das kastenartige Werkstück (10) in einem vorgegebenen Winkel gehalten wird;
wobei eine Arretiereinrichtung (70) vorhanden ist, um das Werkzeug (30) für kastenartige Werkstücke bei Drehung des Drehtischs zum Messen des Profils des kastenartigen Werkstücks (10) in dem vorgegebenen Winkel zu drehen und das Werkzeug (30) für kastenartige Werkstücke unabhängig von der Drehung des Drehtischs in einer Bereitschaftsposition zu halten, indem ein Eingriff des Drehtischs mit dem Werkzeug (30) für kastenartige Werkstücke zum Messen des Profils des wellenartigen Werkstücks (12) aufgehoben wird.

2. Profilmessmaschine nach Anspruch 1, wobei sich die Bereitschaftsposition unter einer Messposition befindet.

3. Profilmessmaschine nach Anspruch 1 oder 2, wobei die Arretiereinrichtung ein Umschaltbolzen (70) für kastenartig/wellenartig ist, der in ein Bolzeneinführloch (23) an einer Drehtischseite oder ein Bolzeneinführloch (27) an einer Reitstockseite (26) gegenüber der Drehtischseite eingeführt wird.

4. Profilmessmaschine nach einem der Ansprüche 1 bis 3, wobei die Funktion entsprechend einem Zustand der Arretiereinrichtung entweder auf ein kastenartiges Werkstück (10) oder ein wellenartiges Werkstück (12) beschränkt ist.

5. Profilmessmaschine nach einem der Ansprüche 1 bis 4, wobei Reflexionssensoren (72, 74) einen Zustand des Umschaltbolzens (70) für kastenartig/wellenartig erfassen und die Sensoren an Unterseiten der Bolzeneinführlöcher (23, 27) vorhanden sind.

6. Profilmessmaschine nach Anspruch 5, wobei der Reflexionssensor (72) an der Drehtischseite nach oben gerichtet am unteren Ende des Bolzeneinführlochs (23) vorhanden ist und der Reflexionssensor (74) an der Reitstockseite (26) seitlich an der Unterseite eines anderen Bolzeneinführlochs (27) vorhanden ist.

## Revendications

1. Machine de mesure de profil comprenant :
une table de rotation (22) pour mesurer un profil d'une pièce à usiner semblable à une tige (12) tout en fixant et en faisant tourner une tige de la pièce à usiner semblable à une tige (12) ; et
un outil (30) pour des pièces à usiner semblables à une boîte qui est verrouillé réciproquement à la table de rotation et utilisé pour mesurer un profil d'une pièce à usiner semblable à une boîte (10) tout en gardant la pièce à usiner semblable à une boîte (10) à un angle prédéterminé ;
dans laquelle les moyens de verrouillage (70) sont prévus pour faire tourner l'outil (30) pour des pièces à usiner semblables à une boîte à l'angle prédéterminé avec rotation de la table de rotation pour mesurer le profil de la pièce à usiner semblable à une boîte (10), et pour maintenir l'outil (30) pour des pièces à usiner semblables à une boîte à une position d'attente sans tenir compte de la rotation de la table de rotation en annulant le verrouillage de la table de rotation avec l'outil (30) pour des pièces à usiner semblables à une boîte pour mesurer le profil de la pièce à usiner semblable à une tige (12).

2. Machine de mesure de profil selon la revendication 1, dans laquelle la position d'attente est dans une position de mesure.

3. Machine de mesure de profil selon la revendication 1 ou 2, dans laquelle les moyens de verrouillage est une broche de couplage (70) pour élément semblable à une boîte / semblable à une tige qui est insérée dans un trou d'insertion de broche (23) sur un côté de la table de rotation ou un trou d'insertion de broche (27) sur un côté de la contre-poupée (26) opposé au côté de la table de rotation.

4. Machine de mesure de profil selon l'une quelconque des revendications 1 à 3, dans laquelle l'opération est limité soit à une pièce à usiner semblable à une boîte (10), soit à une pièce à usiner semblable à une tige (12) conformément à un état des moyens de verrouillage.

5. Machine de mesure de profil selon l'une quelconque des revendications 1 à 4, dans laquelle les capteurs de type à réflexion (72, 74) détectent un état de la broche de couplage (70) pour élément semblable à une boîte / semblable à une tige, les capteurs étant prévus aux bases des trous d'insertion de broche (23, 27).

6. Machine de mesure de profil selon la revendication 5, dans laquelle le capteur de type à réflexion (72) sur le côté de la table de rotation est prévu vers le haut à la base du trou d'insertion de broche (23) et le capteur de type à réflexion (74) sur le côté de la contre-poupée (26) est prévu latéralement à la base d'un autre trou d'insertion de broche (27).
